# EUROPÄISCHE PATENTSCHRIFT

(11) **EP 4 073 502 B1**
(45) Veröffentlichungstag und Bekanntmachung des Hinweises auf die Patenterteilung: **28.08.2024**
(21) Anmeldenummer: 20829196.3
(22) Anmeldetag: 08.12.2020
(51) Int. Cl.: G01N 27/72

(54) **VERFAHREN ZUR BESTIMMUNG EINES MATERIALKENNWERTS VON MAGNETISIERBAREN METALLISCHEN KÖRPERN MITTELS EINER MIKROMAGNETISCHEN SENSORANORDNUNG**
METHOD FOR DETERMINING A CHARACTERISTIC VALUE OF A MAGNETISABLE METALLIC BODY BY MEANS OF A MICROMAGNETIC SENSING ARRANGEMENT
METHODE POUR DETERMINER UNE VALEUR CHARACTERISTIQUE D'UN OBJET METALLIQUE MAGNETISABLE AU MOYEN D'UN AGENCEMENT CAPTEUR MICROMAGNETIQUE

(30) Priorität: 10.12.2019 DE 102019133799
(43) Veröffentlichungstag der Anmeldung: 19.10.2022
(73) Patentinhaber: Rosenxt Holding AG, 6370 Stans (CH)
(72) Erfinder: THALE, Werner, 49134 Wallenhorst (DE); HÜHN, Sebastian, 49808 Lingen (Ems) (DE)
(74) Vertreter: Wischmeyer, André
(86) Internationale Anmeldenummer: PCT/EP2020/085093
(87) Internationale Veröffentlichungsnummer: WO 2021/116109

(56) Entgegenhaltungen:
- CN-A- 104 316 594
- US-A1- 2005 242 803
- LUO XIAOYU ET AL: "Non-destructive Hardness Measurement of Hot-stamped High Strength Steel Sheets based on Magnetic Barkhausen Noise", PROCEDIA ENGINEERING, ELSEVIER BV, NL, vol. 81, 15 October 2014 (2014-10-15), pages 1768 - 1773, XP029078427, ISSN: 1877-7058, DOI: 10.1016/J.PROENG.2014.10.229
- L R PADOVESE ET AL: "A fast Mellin and Scale transform", PROCEEDINGS OF THE INSTITUTION OF MECHANICAL ENGINEERS, PART G: JOURNAL OF AEROSPACE ENGINEERING, vol. 2007, no. 5, 30 April 2009 (2009-04-30), United Kingdom, pages 9 - 588, XP055338241, ISSN: 0954-4100, DOI: 10.1243/09544100JAERO436
- JAVIER GARCÍA-MARTÍN ET AL: "Non-destructive techniques based on eddy current testing", SENSORS,, vol. 11, no. 3, 28 February 2011 (2011-02-28), pages 2525 - 2565, XP002718104, ISSN: 1424-8220, DOI: 10.3390/S110302525
- MATHIAS STOLZENBERG ET AL: "Special: Mess-und Prüftechnik", 1 January 2012 (2012-01-01), XP055158303, Retrieved from the Internet <URL:http://www.emg-automation.com/fileadmin/files/2012_07_SP_Materialcharakterisierung-an-Flachprodukten.pdf> [retrieved on 20141212]

## Beschreibung

Die Erfindung betrifft ein Verfahren zur Bestimmung zumindest eines Materialkennwerts eines magnetisierbaren metallischen Körpers, insbesondere eines Pipeline-Rohres, mittels einer mikromagnetischen Sensoranordnung.

Mikromagnetische Sensoranordnungen sowie ihre Verwendung im Rahmen der zerstörungsfreien Werkstoffprüfung bei der Qualitätssicherung von Bauteilen aus magnetisierbaren metallischen Materialien sind bekannt.

Aufgabe der vorliegenden Erfindung ist es, ein Verfahren bereitzustellen, das für den Einsatz zur Inline-Inspektion von Rohrleitungen anwendbar ist und/oder mit dem zusätzliche Daten aufgenommen werden können, die die verbesserte Bestimmung von Materialkennwerten oder die Bestimmung von bisher nicht mittels mikromagnetischer Untersuchungen bestimmbarer Materialkennwerte zu ermöglichen. Ziel ist es, ein Verfahren zur Bestimmung eines Materialkennwertes mittels einer mikromagnetischen Sensoranordnung für die Inline-Inspektionen von Pipelinerohren bereitzustellen.

Gelöst wird die Aufgabe durch ein Verfahren gemäß Anspruch 1.

Bei einem Verfahren zur Bestimmung eines Materialkennwerts eines magnetisierbaren metallischen Körpers mittels einer mikromagnetischen Sensoranordnung wird der Körper mittels der Sensoranordnung magnetisiert. Hierzu erfolgt eine Strom- oder Spannungsanregung der Sensoranordnung über zumindest eine Anregungsspule zur Signalanregung. Die Strom- oder Spannungsanregung umfasst zumindest einen Vorzeichenwechsel zwischen einem positiven Teil einer Halbwelle und einem negativen Teil einer Halbwelle. Hierbei kann der positive Teil der Halbwelle auf den negativen Teil folgen oder umgekehrt. Durch die Strom- oder Spannungsanregung erzeugt ein Magnetkern der Anregungsspule der mikromagnetischen Sensoranordnung ein Magnetfeld, durch das der zu prüfende Körper magnetisiert wird. Es ergibt sich ein Magnetfeld eines die Sensoranordnung und den Körper umfassenden Magnetkreises, das sich zeitlich ändert. Durch das sich verändernde Magnetfeld des Magnetkreises ergibt sich ein Signal in dem Empfänger, das gemessen wird. Da das Verhalten des gesamten Magnetkreises im Wesentlichen durch die Eigenschaften des Körpers bestimmt wird, können aus dem Signal Rückschlüsse auf die Struktur des Körpers und hieraus auch auf den zumindest einen Materialkennwert des Körpers gezogen werden. Hierzu wird das Signal einer Fourier-Transformation unterzogen und aus den Fourier-Komponenten der entsprechende Materialkennwert bestimmt. Dem erfindungsgemäßen Verfahren liegt nun die Erkenntnis zugrunde, dass nach Abschalten der Anregung der Sensoranordnung ein Nachschwingen des Magnetkreises sowie des durch das abklingende Magnetfeld bewirkten Signals in dem Empfänger erfolgt. Dem Abklingen des Signals, dem Nachschwingen nach der Abschaltung, können zusätzliche Informationen entnommen werden, die die Qualität des Verfahrens zur Ermittlung eines Materialkennwertes verbessern. Der Materialkennwert kann verbessert bestimmt werden bzw. es können mit dem erfindungsgemäßen Verfahren Materialkennwerte bestimmt werden, die sich mit bisherigen mikromagnetischen Untersuchungen nicht bestimmen lassen.

Weiterhin ergibt sich durch das Abschalten sowie das Anschalten der Anregung mit einer insbesondere konstanten Anregungsfrequenz jeweils ein breites Frequenzspektrum, dessen Signale ausgewertet und zur Bestimmung von Materialkennwerten verwendet werden können.

Zur Durchführung des Verfahrens sind neben einer mikromagnetischen Sensoranordnung dem Fachmann prinzipiell bekannte Mittel zur Erzeugung der Strom- oder Spannungsanregung mit einer bestimmten, vorzugsweise wählbaren Frequenz, wie ein Funktionsgenerator mit einer entsprechenden Steuerung, entsprechende Mittel zum Aufnehmen des sich in dem Empfänger ergebenden Signals wie ein elektronisches Messgerät und/oder ein Messverstärker und ein entsprechender Speicher für die Messdaten, sowie Auswertemittel zur Durchführung der Fourier-Transformation und/oder Bestimmung des Materialkennwertes, wobei diese Schritte beispielsweise mittels handelsüblicher EDV-Anlagen durchgeführt werden können, vorzusehen. Weiterhin ist eine entsprechende Steuerungseinheit vorzusehen.

In einem magnetisierbaren metallischen Körper sind die magnetischen Momente der Atome (Elementarmagnete) in begrenzten Bezirken parallel ausgerichtet. Die Richtung der Magnetisierung orientiert sich am Kristallgitter des Werkstoffs. Diese mikroskopisch kleinen magnetisierten Bereiche werden auch als Weiss-Bezirke bezeichnet. Die Grenzen zwischen den Bezirken werden auch als Bloch-Wände bezeichnet. Setzt man ein solches Material einem steigenden Magnetfeld aus, verschieben sich zunächst die Bloch-Wände zugunsten derjenigen Weiss-Bezirke, die in Richtung des äußeren Magnetfelds ausgerichtet sind. Zudem ändert sich die Ausrichtung der Magnetisierung innerhalb eines Weiss-Bezirks schlagartig. Dies ist auch als Barkhausen-Sprung bekannt. Das Verschieben der Bloch-Wände erfolgt diskontinuierlich. Dies ist insbesondere dann der Fall, wenn nicht-magnetische Einschlüsse oder Versetzungen in einem Kristallgitter die Bloch-Wände lokal festhalten. Unter Wirkung von einem äußeren magnetischen Feld kann es dann zu einem schlagartigen Lösen und Versetzen der Bloch-Wand kommen. Aus dem Verlauf der Magnetisierung des Körpers kann so auf seine mikroskopische Struktur, insbesondere die Größe der Kristalle sowie Einschlüsse und Fehlstellen innerhalb der Kristalle geschlossen werden. Diese Fehlstellen und Einschlüsse beeinflussen auch die mechanischen Eigenschaften des Körpers. Somit kann aus dem Signal, das aufgrund des Magnetfeldes des untersuchten Körpers gewonnen wird, auf Eigenschaften des Körpers zurückgeschlossen werden.

Bevorzugt erfolgt eine pulsförmige Anregung der mikromagnetischen Sensoranordnung. Der Anregungspuls kann hierbei als sinusförmiger Puls oder rechteckiger Puls erfolgen. Auch Mischformen wie sägezahnförmige Pulse sind denkbar. Wichtig ist, dass hierbei ein positiver und negativer Puls bzw. Teilpuls unmittelbar aufeinander folgen, also ein Vorzeichenwechsel stattfindet. Ob ein negativer auf einen positiven Puls oder ein positiver auf einen negativen Puls folgt, ist hierbei unwichtig. Der Anregungspuls kann einige wenige aufeinanderfolgenden Schwingungen (<5 Schwingungen) umfassen, nach denen die Anregung abgeschaltet und das Nachschwingen gemessen wird. Durch die Begrenzung der Anregung auf einen kurzen Anregungspuls kann das Verfahren schnell durchgeführt werden. Besonders bevorzugt erfolgt die Anregung durch genau eine Schwingung, die positive und negative Anteile sowie insbesondere eine positive und eine negative Halbwelle umfasst, die unmittelbar aufeinander folgen. Bei vorgegebener Frequenz der Anregung werden so pro Zeiteinheit mehr Ein- und Ausschaltvorgänge durchgeführt. Die Messzeit wird verkürzt und das Verfahren kann schneller durchgeführt werden.

Vorzugsweise umfasst das Verfahren einen Prüftakt mit vier in der im Folgenden genannten Reihenfolge aufeinanderfolgenden Schritten:
a) Einmagnetisieren des Körpers durch einen ersten Anregungspuls;
b) Abschalten der Anregung während einer ersten Totzeit;
c) Anregen des Körpers durch einen zweiten Anregungspuls in einem Messtakt;
d) Abschalten der Anregung während einer zweiten Totzeit, wobei im Messtakt und
in der zweiten Totzeit eine Messung des Signals im Empfänger der Sensoranordnung erfolgt.

Durch die Einmagnetisierung sowie das nachfolgende Abklingen des sich zeitlich verändernden magnetischen Feldes bzw. des Signals im Empfänger werden Einflüsse einer eventuell vorhandenen remanenten Magnetisierung des Körpers, die die eigentliche Messung beeinträchtigen können, verringert. Auf diese Einmagnetisierung erfolgt der eigentliche Messzyklus, umfassend den Messtakt, in dem eine Anregung des Körpers durch einen zweiten Anregungspuls erfolgt, die anschließende Abschaltung der Anregung und eine an den Messtakt anschließende zweite Totzeit. Während des Messtaktes und der zweiten Totzeit wird eine Messung des Signals im Empfänger der Sensoranordnung durchgeführt. Dieses Signal wird ganz oder teilweise der Fourier-Transformation unterzogen und aus den Fourier-Komponenten der Materialkennwert bestimmt.

Bevorzugt erfolgt die Anregung mit einer Magnetisierungsfrequenz zwischen 500 und 5000 Hertz, vorzugsweise zwischen 800 und 1600 Hertz. Diese Magnetisierungsfrequenzen sind verglichen mit den typischerweise verwendeten Magnetisierungsfrequenzen von 50 Hertz sehr hoch. Durch die hohen Magnetisierungsfrequenzen wird ermöglicht, das erfindungsgemäße Verfahren im Rahmen von Inline-Inspektionsverfahren zu verwenden. Bei Inline-Inspektionsverfahren wird die Sensoranordnung relativ zu dem Körper bewegt. Die Verschiebung zwischen Sensoranordnung und Körper während einer einen Prüftakt umfassenden Messung soll hierbei vorzugsweise auf 10 % der Länge der Sensoranordnung begrenzt werden. Unter Zugrundelegung einer Vorschubgeschwindigkeit von zwei Metern pro Sekunde, einer Länge der Sensoranordnung von 5 bis 10 cm und einem vier Perioden dauernden Prüftakt, wobei der Prüftakt die Einmagnetisierung, die erste Totzeit, den Messtakt und die zweite Totzeit umfasst und für jede dieser Perioden des Prüftakts der Zeitraum des eine vollständige Schwingung mit Nulldurchgang umfassenden Messtakts vorgesehen ist, ergibt sich eine minimal notwendige Magnetisierungsfrequenz von 800 Hertz. Die notwendige Mindestmagnetisierungsfrequenz ist somit abhängig von der Baugröße der mikromagnetischen Sensoranordnung, und der Vorschubgeschwindigkeit, wobei kleinere Sensoranordnungen und höhere Vorschubgeschwindigkeiten höhere Magnetisierungsfrequenzen erfordern.

Bevorzugt wird die mikromagnetische Sensoranordnung mit einer kontinuierlichen Vorschubgeschwindigkeit von mindestens 0,5 Meter pro Sekunde, vorzugsweise zwischen 1 und 2 Meter pro Sekunde relativ zu dem Körper bewegt. Mit diesen Vorschubgeschwindigkeiten ist das Verfahren für eine wirtschaftliche Inline-Inspektion von Rohren geeignet.

Vorzugsweise erfolgt die Messung des Signals mittels einer Empfangsspule mit einem Magnetkern als Empfänger. In diesem Fall stellt das Signal das durch das veränderbare Magnetfeld des Körpers bzw. des den Körper und die Sensoranordnung umfassenden Magnetkreises in der Empfangsspule induzierte Strom- oder Spannungssignal dar. Da das Verhalten des Magnetkreises im Wesentlichen durch das magnetische Verhalten des Körpers bestimmt ist, kann aus dem Signal auf die mechanischen Eigenschaften des Körpers zurückgeschlossen werden. Hierdurch wird die Messung der Eigenschaften des Körpers gemittelt über den Wirkungsbereich der Sensoranordnung ermöglicht. In einer bevorzugten Ausführungsform umfasst die Sensoranordnung ein Magnetjoch, das die Magnetkerne der Anregungsspule und der Empfangsspule ausbildet. Hierdurch kann der magnetische Fluss im Magnetkreis verbessert geführt werden. Die Signalqualität der Sensoranordnung wird verbessert. Eine solche Sensoranordnung mit Magnetjoch kann auf einfache Weise hergestellt werden.

Alternativ erfolgt die Messung des Signals mittels eines Magnetfeldsensors, insbesondere eines Hallelements, als Empfänger. Mit einem Magnetfeldsensor, insbesondere einem Hallelement, als Empfänger kann das durch die mikromagnetische Sensoranordnung erzeugte lokale Magnetfeld gemessen werden. Dadurch besteht die Möglichkeit, auch Materialinhomogenitäten, die deutlich kleinere Längen und Breiten aufweisen als die Wirkungslänge und -breite der Sensoranordnung, anhand ihrer Streufelder zu detektieren. Auch weitere Magentfeldsensoren als Empfänger können vorgesehen sein, wodurch mehr Messkanäle zur Verfügung stehen und beispielsweise auch ein Abheben der Sensoranordnung von dem Prüfkörper detektiert werden kann.

Auch ist es denkbar, eine Sensoranordnung mit einer Empfangsspule und einem oder mehreren Magnetfeldsensor(en) wie beispielsweise Hallelement(en) als Empfänger zu verwenden. Hierbei werden mehrere Signale in den mehreren Empfänger durch das Magnetfeld des Magnetkreises erzeugt und gemessen. Die weitere Auswertung der Signale durch Fourier-Transformation und Bestimmung des Materialkennwerts durch zumindest eine Fourier-Komponente kann für einzelne dieser Signale separat, alle Signale separat, einzelne Signale gemeinsam oder alle Signale gemeinsam erfolgen.

Vorzugsweise erfolgt eine Korrelation des zumindest einen Materialkennwerts mit den Fourier-Komponenten anhand von Prüfkörpern. Die Prüfkörper werden mit dem erfindungsgemäßen Verfahren gem. einem der Ansprüche 1 bis 7 gemessen und ihre Fourier-Komponenten ermittelt. Gleichzeitig sind die Materialkennwerte der Prüfkörper bekannt und/oder diese werden vor oder nach der Bestimmung der Fourier-Komponenten mit anderen Messmethoden, ggf. auch im Rahmen einer zerstörenden Werksprüfung, bestimmt. Durch eine solche Korrelation von Materialkennwert und Fourier-Komponenten kann der Materialkennwert aus den Fourier-Komponenten quantitativ bestimmt werden.

Besonders bevorzugt erfolgt die Ermittlung der Korrelation durch Maschinen-Learning-Verfahren. Dies ist besonders vorteilhaft, wenn die Korrelation zwischen Fourier-Komponenten und dem Materialkennwert nicht ohne weiteres ersichtlich ist. Die Verwendung von Maschine-Learning-Verfahren ermöglicht somit die Erstellung einer Korrelation bei komplexen Zusammenhängen zwischen Fourier-Komponenten und dem jeweilig zu ermittelnden Materialkennwerts. Das Verfahren kann somit besonders flexibel für die Ermittlung unterschiedlicher Materialkennwerte eingesetzt werden.

Besonders bevorzugt erfolgt die Ermittlung der Korrelation nach dem Random-Forest-Verfahren oder mittels einer Support Vector Machine. Diese stellen schnelle und zuverlässige Maschine-Learning-Verfahren dar, durch die diese Korrelation mit geringem Aufwand bestimmt werden kann.

Vorzugsweise werden durch das Verfahren ein mechanisch-technologischer Materialkennwert wie beispielsweise die Zähigkeit, insbesondere die Charpy-Zähigkeit, Materialinhomogenitäten, wie beispielsweise lokale Aufhärtungen, und/oder Materialspannungen, wie beispielsweise Zugspannungen, bestimmt. Vorzugsweise erfolgt auch die Bestimmung von mehr als einem Materialkennwert in dem Verfahren mit einer Messung. Das erfindungsgemäße Verfahren kann somit für die Bestimmung unterschiedlicher Materialkennwerte herangezogen werden. Die beispielhaft genannten Kennwerte wie Charpy-Zähigkeit, axiale Spannungen sowie lokale Aufhärtungen sind zum Beispiel relevant bei der Verwendung des Verfahrens im Rahmen von Inline-Inspektionen von Rohrleitungen. Das Verfahren ist jedoch nicht auf diese Kennwerte bzw. die Anwendung im Rahmen von Inline-Inspektionen von Pipelines beschränkt.

Eine zur Durchführung des Verfahrens nach einem der Ansprüche 1 bis 11 geeignete mikromagnetische Sensoranordnung weist zumindest eine Anregungsspule zur Signalanregung sowie zumindest einen Empfänger auf. Dabei ist der Magnetkern der Anregungsspule der Sensoranordnung aus einem nanokristallinen Werkstoff mit hoher magnetischer Permeabilität gefertigt. Das hochpermeable Magnetkernmaterial gewährleistet hierbei auch bei Frequenzen im kHz-Bereich noch einen relativ hohen magnetischen Fluss. Nanokristalline Werkstoffe weisen Kristallite mit Kornabmessungen typischerweise im Bereich von 10 - 15 nm auf, wobei die Kristallite durch amorphe Grenzschichten von wenigen Atomlagen Dicke getrennt sind. Die Werkstoffe weisen typischerweise eine Dicke von 20 bis 40 µm auf. Ein Magnetkern aus nanokristallinem Werkstoff ist aus einer Vielzahl von dünnen Lagen aufgebaut.

Eine Sensoranordnung mit einem Magnetkern mit hoher Permeabilität ermöglicht, dass das Verhalten des gesamten Magnetkreises aus Sensoranordnung und zu prüfenden Körper und somit der Hysterese-Kurve auch bei hohen Magnetisierungsfrequenzen noch wesentlich durch den zu prüfenden Körper bestimmt wird. Eine hohe magnetische Permeabilität weist hierbei ein Material mit einem µᵣ zwischen 15 000 und 150 000 auf.

Um die erfindungsgemäße mikromagnetische Sensoranordnung zu betreiben, sind dem Fachmann prinzipiell bekannte Mittel zur Erzeugung der Strom- oder Spannungsanregung mit einer bestimmten, vorzugsweise wählbaren Frequenz, wie ein Funktionsgenerator mit einer entsprechenden Steuerung, entsprechende Mittel zum Aufnehmen des sich in dem Empfänger ergebenden Signals wie ein elektronisches Messgerät und/oder ein Messverstärker und ein entsprechender Speicher für die Messdaten, sowie Auswertemittel zur Durchführung der Fourier-Transformation und/oder Bestimmung des Materialkennwertes, wobei diese Schritte beispielsweise mittels handelsüblicher EDV-Anlagen durchgeführt werden können, vorzusehen. Weiterhin ist eine entsprechende Steuerungseinheit vorzusehen.

Vorzugsweise ist der Empfänger durch eine Empfangsspule mit einem Magnetkern ausgebildet. In dieser wird durch das sich zeitlich verändernde Magnetfeld ein Strom- und/oder Spannungssignal induziert. Hierdurch wird eine besonders robuste Sensoranordnung erzielt. In einer bevorzugten Ausführungsform umfasst die Sensoranordnung ein Magnetjoch, das die Magnetkerne der Anregungsspule und der Empfangsspule ausbildet.

Alternativ oder zusätzlich ist der Empfänger durch einen Magnetfeldsensor, insbesondere ein Hallelement, ausgebildet. Der Magnetfeldsensor ermöglicht es, das durch die Sensoranordnung erzeugte, wesentlich jedoch durch die magnetischen Eigenschaften des zu prüfenden Körpers bestimmte lokale Magnetfeld zu messen. Dadurch besteht die Möglichkeit, auch Materialinhomogenitäten, die deutlich kleinere Längen und Breiten aufweisen als die Wirklänge und -breite der Sensoranordnung, anhand ihrer Streufelder zu detektieren.

In einer besonders bevorzugten Ausführungsform weist die Sensoranordnung ein zumindest den Magnetkern der Anregungsspule ausbildendes Magnetjoch sowie drei Magnetfeldsensoren auf, von denen je einer an den Jochenden und einer zwischen den Jochenden auf einer dem zu untersuchenden Körper zugewandten Seite des Jochbogens angeordnet ist. Die an den Jochenden angeordneten Magnetfeldsensoren dienen vornehmlich dazu, ein Abheben des Sensors von dem Körper zu ermitteln. Der zwischen den Jochenden angeordnete Magnetfeldsensor dient vornehmlich dazu, wie oben beschrieben ein lokales Magnetfeld zu messen. Zudem stellen die Magnetfeldsensoren zusätzliche Messkanäle der Sensoranordnung bereit. Die Magnetfeldsensoren können hierbei beispielsweise als Hallelement ausgeführt sein.

Bevorzugt umfasst die Sensoranordnung auch einen Temperatursensor. Dies ist besonders wichtig bei der Verwendung eines Hallelementes als Empfänger, da das Signal eines Hallelementes temperaturabhängig ist. Aber auch der zu bestimmende Materialkennwert kann temperaturabhängig sein, wodurch die Kenntnis der Temperatur, bei der der Materialkennwert bestimmt wurde, wichtig für die korrekte Einordnung des Materialkennwertes ist.

Bevorzugt weist die Sensoranordnung eine Länge zwischen 5 und 10 cm auf. Eine Sensoranordnung mit derartigen Abmessungen ist besonders gut geeignet zur Inline-Inspektion, da sie zum Einen groß genug ist, nicht durch einen Abhebeeffekt beeinträchtigt zu sein und zum Anderen von Baugröße und Gewicht noch für den Inline-Einsatz geeignet ist.

Weiterhin kann die Sensoranordnung an einem Inspektionsmolch zur Inline-Inspektion von Rohrleitungen verwendet werden. Vorzugsweise weist ein solcher Inspektionsmolch vier bis acht Sensoranordnungen auf, die über seinen Umfang angeordnet sind. Ein solcher Inspektionsmolch ermöglicht somit auf einfache Weise eine Bestimmung des Materialkennwerts an bestimmten über den Umfang der Rohrleitung verteilten Punkten. Somit kann ein umfassendes Bild über die Materialeigenschaften bzw. den Materialzustand der zu inspizierenden Rohrleitung gewonnen werden. Alternativ kann auch eine Vollabdeckung der Rohrleitung durch den Inspektionsmolch erfolgen, z.B. wenn Materialinhomogenitäten erfasst und/oder eine Längsnaht der Rohrleitung untersucht werden sollen. Für eine Vollabdeckung werden Sensoranordnungen in mehreren in axialer Richtung hintereinander angeordneten Messebenen angeordnet, wobei Sensoren in den einzelnen Messebenen so zu einander in Umfangsrichtung versetzt sind, dass jeweils zwischen den Sensoranordnungen einer Messebene vorhandene Lücken durch Sensoranordnungen anderer Messebenen abgedeckt werden.

Weitere Vorteile und Einzelheiten der Erfindung sind der nachfolgenden Figurenbeschreibung mit beispielhaften erfindungsgemäßen Ausbildungen zu entnehmen. In den Figuren zeigt auf schematischer Weise:
- Fig. 1: ein Ablaufdiagramm des erfindungsgemäßen Verfahrens,
- Fig. 2: eine mikromagnetische Sensoranordnung zur Durchführung des Verfahrens,
- Fig. 3: einen Prüftakt des erfindungsgemäßen Verfahrens,
- Fig. 4: ein Anregungssignal, das daraus folgende Signal sowie die Fourier-Transformation des Signals,
- Fig. 5: das Ergebnis der Bestimmung der Charpy-Zähigkeit mittels des erfindungsgemäßen Verfahrens,
- Fig. 6: das Ergebnis einer Messung einer lokalen Aufwertung mit einem mobilen Härtemessgerät,
- Fig. 7: das Ergebnis einer Messung mit dem erfindungsgemäßen mikromagnetischen Verfahren unter Verwendung der am Jochbogen angeordneten Empfangsspule als Empfänger,
- Fig. 8: das Ergebnis einer Messung mit dem erfindungsgemäßen Verfahren unter Verwendung des Hallelements in der Jochmitte als Empfänger,
- Fig. 9: Korrelation zwischen einem mit dem erfindungsgemäßen Verfahren erhaltenen Fourier-Komponenten und der Zugspannung in einem untersuchten Körper,
- Fig. 10: einen Inspektionsmolch zur Inline-Inspektion von Rohrleitungen mit der Sensoranordnung.

Gleich oder ähnlich wirkende Teile sind, sofern dienlich, mit identischen Bezugsziffern versehen. Einzelne technische Merkmale der nachfolgend beschriebenen Ausführungsbeispiele können mit den Merkmalen des Anspruchs 1 sowie mit den Merkmalen einzelner vorbeschriebener Ausführungsbeispiele zu erfindungsgemäßen Gegenständen kombiniert werden.

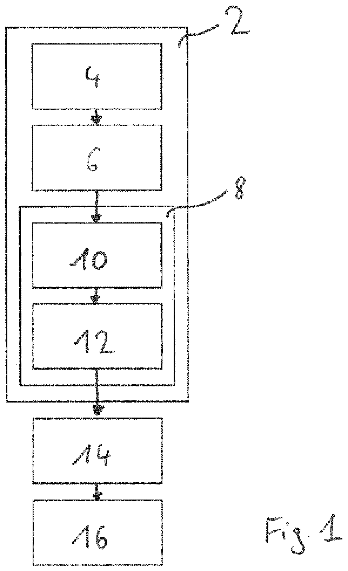

Fig. 1 zeigt einen beispielhaften Ablauf des erfindungsgemäßen Verfahrens zur Bestimmung zumindest eines Materialkennwerts eines magnetisierbaren metallischen Körpers 26 mittels einer mikromagnetischen Sensoranordnung 18, die zumindest eine Anregungsspule 22 mit Magnetkern sowie wenigstens einen Empfänger aufweist. Der Magnetkern der Anregungsspule 22 ist hierbei durch das Magnetjoch 20 ausgebildet. Der zumindest eine Materialkennwert wird an dem Körper 26 lokal ermittelt. Hierbei werden vorzugsweise die Sensoranordnung 18 und der Körper 26 relativ zueinander bewegt. In einem Prüftakt 2 erfolgt zunächst eine Einmagnetisierung, bei der ein Anregungssignal an die Anregungsspule 22 der Sensoranordnung 18 angelegt wird. Hierdurch wird das Magnetjoch 20 magnetisiert und ein Magnetfeld erzeugt, durch das der Körper 26 magnetisiert wird. Bei einem sich im Zeitablauf ändernden Anregungssignal ist auch das Magnetfeld und somit die Magnetisierung des Körpers 26 zeitlich veränderlich. An die Einmagnetisierung 4 schließt sich eine erste Totzeit 6 an. In dieser kann das veränderliche Magnetfeld in dem Magnetkreis aus Sensoranordnung 18 und Körper 26 ausschwingen. Hierdurch werden eventuell vorhandene remanente Magnetisierungen des Körpers 26, die die nun im Messzyklus 8 folgende eigentliche Messung verfälschen könnte, vermindert. Der eigentliche Messzyklus 8 unterteilt sich in den Messtakt 10, in dem über die Anregungsspule 22 der Sensoranordnung 18 durch einen Anregungspuls ein sich im Zeitablauf änderndes Magnetfeld erzeugt wird. Der Anregungspuls weist zumindest einen Vorzeichenwechsel zwischen einem positiven Teil einer Halbwelle und einem negativen Teil einer Halbwelle auf. Hierdurch erfolgt eine Umkehrung der Magnetisierung in dem Körper. Das veränderbare Magnetfeld, das durch den Magnetkreis aus Sensoranordnung 18 und Körper 26 bestimmt wird, erzeugt ein Signal im Empfänger, das aufgenommen wird. Aus diesem kann auf den zeitlichen Ablauf der Magnetisierung des Körpers 26 zurückgeschlossen werden. Dies wiederum lässt Rückschlüsse auf Materialeigenschaften des Körpers 26 zu. Nach dem Messtakt 10 wird die Anregung abgeschaltet. Danach schließt sich eine zweite Totzeit 12 an. Während der zweiten Totzeit 12 wird ein Nachschwingen des Signals im Empfänger nach Abschalten der Anregung gemessen. Zumindest der durch das Nachschwingen entstandene Teil des Signals wird in Schritt 14 einer Fourier-Transformation unterzogen. Vorzugsweise wird das Signal während des Messtaktes 10 und der Totzeit 12, die zusammen den Messzyklus 8 bilden, in der Fourier-Transformation verwendet. Anhand der Fourier-Komponenten erfolgt dann im Schritt 16 die Ermittlung des zumindest einen Materialkennwertes.

Der Anregungspuls ist hierbei in den folgenden Ausführungsbeispielen ein Sinus-Puls aus zwei Halbwellen mit einem Nulldurchgang. Auch Rechteck-Pulse oder anders geformte Pulse mit einem Vorzeichenwechsel sind hier denkbar. Um ein möglichst schnelles Messverfahren zu ermöglichen, ist der Anregungspuls auf genau eine Schwingung umfassend eine positive und eine negative Halbwelle, die unmittelbar aufeinander folgen, begrenzt.

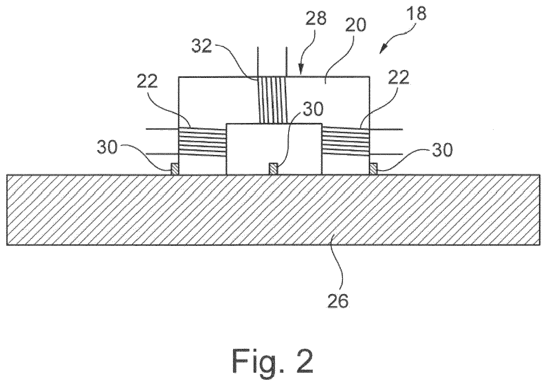

Fig. 2 zeigt eine Sensoranordnung 18 zur Durchführung des Verfahrens. Die Sensoranordnung 18 weist ein Magnetjoch 20 sowie zwei parallel geschaltete Anregungsspulen 22 auf, die die Schenkel des Magnetjochs 20 an den jeweiligen Enden umwickeln. Die Sensoranordnung 20 weist weiterhin Empfänger auf. Einer dieser Empfänger ist durch eine Empfangsspule 32 am Jochbogen 28 des Magnetjochs 20 gebildet. Das Magnetjoch 20 bildet hierbei die Magnetkerne der Anregungsspule 22 und der Empfangsspule 32 aus. Auch Sensoranordnungen 18 mit nur einer Anregungsspule 22 und einer Empfangsspule 32 sind denkbar. Dann ist typischerweise auch die Empfangsspule 32 an einem Schenkel des Magnetjoch 20 statt am Jochbogen 28 angeordnet. Eine solche Sensoranordnung 18 ist einfacher herstellbar, da die Spulen 22,32 unabhängig vom Magnetjoch 20 gewickelt und anschließend auf die Schenkel des Magnetjochs 20 aufgeschoben werden können. In der Empfangsspule 32 werden durch ein sich zeitlich veränderndes Magnetfeld eines Magnetkreises aus Magnetjoch 20 und Körper 26 Ströme und/oder Spannungen induziert. Diese bilden ein Signal, das gemessen werden kann. Die Sensoranordnung 18 der Fig. 2 weist zudem Hallelemente 30 auf. Zwei dieser Hallelemente 30 sind jeweils an den Schenkeln des Magnetjochs 20 angeordnet. Hierüber kann ein Abheben der Sensoranordnung 18 von dem Körper 26 bei einer Relativbewegung zwischen Sensoranordnung 18 und Körper 26 erfasst und in der Auswertung berücksichtigt werden. Ein weiteres Hallelement 30, das zwischen den beiden Schenkeln auf der dem Körper 26 zugewandten Seite des Magnetjochs 20 angeordnet ist, ist ausgebildet, um lokale Veränderungen des Magnetfeldes aus dem Magnetkreis aus Sensoranordnung 18 und Körper 26 aufzunehmen. Hier ist es denkbar, noch weitere Hallelemente 30 anzuordnen. Nicht dargestellt ist ein Temperaturfühler, der ggf. notwendig ist, um das Signal der Hallelemente 30 zu korrigieren sowie die Temperatur während der Messung zu erfassen, was die Einordnung eines auf diese Weise bestimmten temperaturabhängigen Materialkennwerts ermöglicht. Das Signal eines Hallelements 30 ist temperaturabhängig.

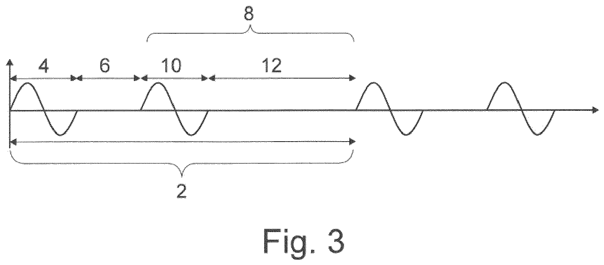

Fig. 3 zeigt das Anregungssignal an der Anregungsspule 22 im Zeitablauf während eines Prüftaktes 2. Dieser umfasst die vier Phasen Einmagnetisierung 4, erste Totzeit 6, Messtakt 10 und zweite Totzeit 12. In dem Beispiel in Fig. 3 erfolgt eine Anregung über ein sinusförmiges Signal mit zwei Halbwellen, wobei die Einmagnetisierung, die erste Totzeit und der Messtakt eine zeitliche Dauer aufweisen, die genau einer Schwingung des Anregungssignals entsprechen. Die zweite Totzeit 12 ist demgegenüber länger gewählt.

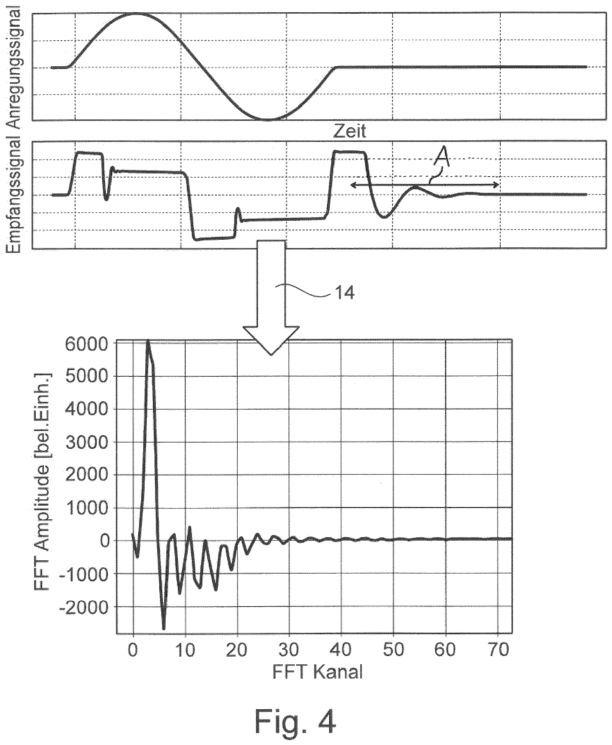

Fig. 4 zeigt in der oberen Abbildung über der Zeit das Anregungssignal sowie darunter ebenfalls über der Zeit das Signal im Empfänger, das gemessen wird, während des Messzyklus 8. Erkennbar ist die Anregung im Messtakt 10 über eine sinusförmige Schwingung mit einer positiven und einer negativen Halbwelle und einem Vorzeichenwechsel. Das Signal zeigt einmal den Verlauf während des Messtaktes 10 und das Nachschwingen A in der zweiten Totzeit 12. Dieses Signal wird einer Fourier-Transformation 14 unterzogen, aus der sich einzelne Fourier-Komponenten ergeben (untere Figur mit der FFT-Amplitude in beliebigen Einheiten über dem FFT-Kanal). Diese Fourier-Komponenten weisen eine Korrelation zu dem gesuchten Materialkennwert auf. Für eine quantitative Bestimmung des Materialkennwertes ist eine Kalibrierung des Messverfahrens anhand von Prüfkörpern mit bekannten Materialkennwerten notwendig, an denen das erfindungsgemäße Verfahren durchgeführt wird. Hierbei werden ein oder mehrere Fourier-Komponenten mit dem Materialkennwert in Beziehung gesetzt. Diese Beziehung kann einfach sein, wenn sich eine Fourier-Komponente als direkt proportional zu dem gesuchten Materialkennwert erweist oder der Materialkennwert über einfache Zusammenhänge aus einer oder einigen wenigen Fourier-Komponenten ermittelt werden kann. Die Beziehung kann sich jedoch auch als sehr komplex darstellen. In einem solchen Fall kann die Korrelation beispielsweise durch machine learning-Verfahren wie das Random Forest-Verfahren oder eine Support Vector Machine erfolgen.

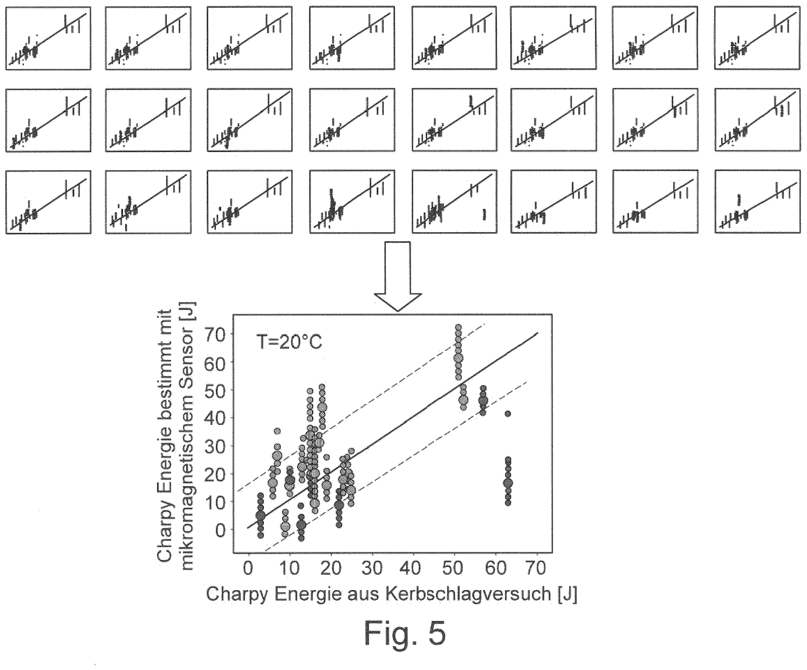

Fig. 5 zeigt die Verwendung des erfindungsgemäßen Verfahrens zur Bestimmung der Charpy-Zähigkeit von Pipelinerohren. Hierzu wurden herausgetrennte Segmente alter Pipelinerohre untersucht. Aus jedem Segment wurden Probenstücke entnommen, an denen die Charpy-Zähigkeit mittels Kerbschlagbiegeversuch bei Raumtemperatur ermittelt wurde. An den Proben wurde die erfindungsgemäße Messung gemäß des erfindungsgemäßen Verfahrens durchgeführt. Hierbei wurden 30 komplexwertige Fourier-Komponenten bestimmt, die mittels machine learning nach dem Random-Forest-Verfahren mit den experimentell ermittelten Charpy-Zähigkeiten der Proben korreliert wurden. Das Training erfolgte nach der N-1-Methode, bei der 23 Proben zum Trainieren verwendet wurden und die so erhaltene Kalibrierung an der 24. Probe getestet wurde. Das Verfahren liefert eine brauchbare Korrelation der mittels des machine learning-Verfahrens kalibrierten Messergebnissen mit den durch Kerbschlagversuch ermittelten Charpy-Zähigkeiten.

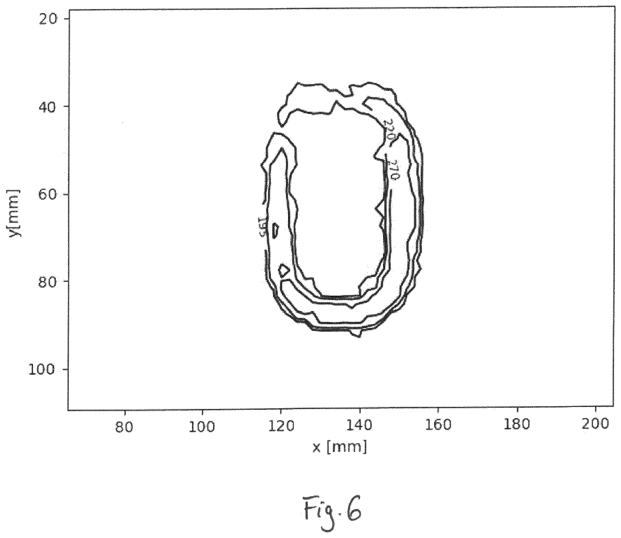

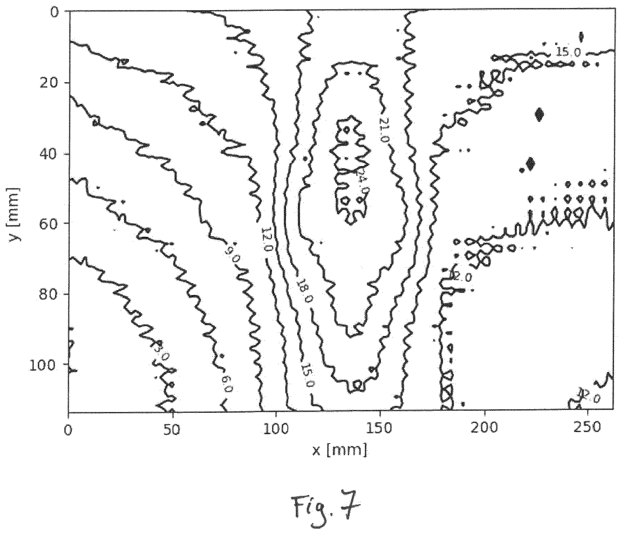

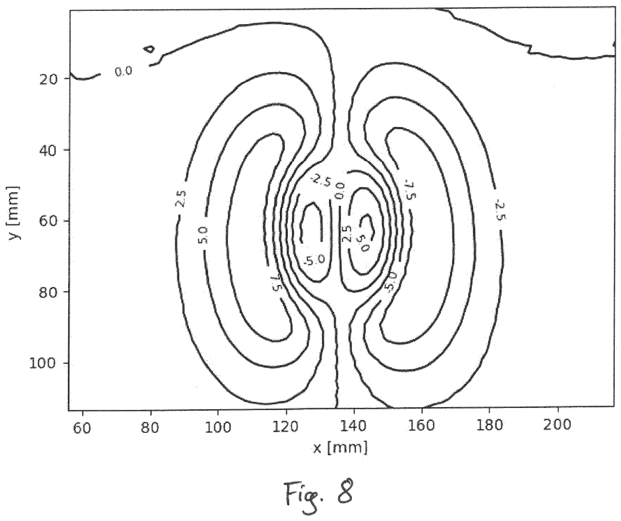

Fig. 6, 7 und 8 zeigen die Ergebnisse der Verwendung des erfindungsgemäßen Verfahrens zur Messung von Materialinhomogenitäten am Beispiel von lokalen Aufhärtungen. Hierzu wurde mittels Induktivhärtung an einem Testkörper eine lokale Aufhärtung erzeugt. Mit einem hufeisenförmigen Induktor wurde der Körper lokal zum Glühen gebracht und mit Wasser abgeschreckt. Fig. 6 zeigt die Ergebnisse einer Härtemessung mit einem mobilen Härtemessverfahren nach der Ultraschallkontaktimpedanz-Methode. Die Messung erfolgt in einem Messraster von 2 x 2 mm. Fig. 7 zeigt das Ergebnis einer Messung mit dem erfindungsgemäßen Verfahren mit der Sensoranordnung 18, wobei dieses Ergebnis auf Grundlage des an der am Jochbogen 28 angeordneten Empfangsspule 32 gemessenen Signals ermittelt wurde. Die Aufhärtung kann mittels des erfindungsgemäßen Verfahrens detektiert werden, wobei die Auflösung aufgrund der großen Wirkfläche der Sensoranordnung 18 unscharf ist. Fig. 8 zeigt das Ergebnis, wenn zur Auswertung das Signal des in der Mitte des Magnetjochs 20 angeordneten Hallelements 30 herangezogen wird, das lokale Streufelder des Magnetfeldes detektieren kann. Hierüber kann auch mittels des erfindungsgemäßen Verfahrens die ovale Form der Aufhärtung aufgelöst werden.

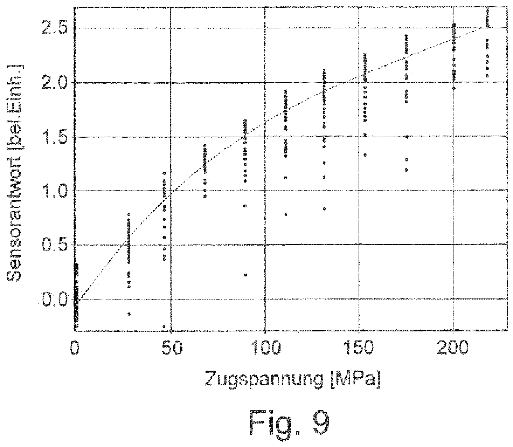

Fig. 9 zeigt die Verwendung des erfindungsgemäßen Verfahrens zur Messung von Materialspannungen am Beispiel von Zugspannungen. Hierzu wurde ein Zugversuch durchgeführt, bei dem die Zugspannung in dem Prüfkörper mittels eines am Körper befestigten Sensors bestimmt wurde. Gleichzeitig wurden während des Zugversuches Messungen mittels des erfindungsgemäßen Verfahrens durchgeführt. Aus der Fourier-Transformation des resultierenden Signals ließ sich eine einzelne Fourier-Komponente ermitteln, die eine gute Korrelation mit der Zugspannung zeigte. Somit können mittels des erfindungsgemäßen Verfahrens auch Zugspannungen ermittelt werden.

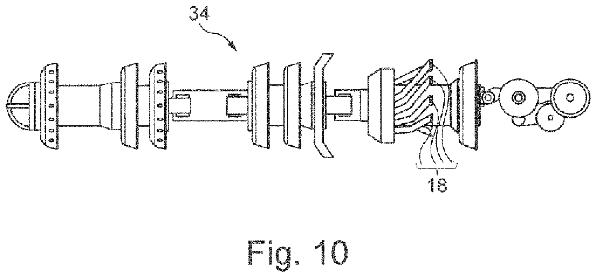

Fig. 10 zeigt einen Inline-Inspektionsmolch 34 zur Inline-Inspektion von Rohrleitungen, der mit entsprechenden Sensoranordnungen 18 versehen ist. Der dargestellte Molch 34 weist acht über den Umfang verteilte Sensoranordnungen auf. Gegebenenfalls können auch vier oder sechs über den Umfang angeordnete Sensoranordnungen 18 ausreichend sein, um eine ausreichende Beschreibung des Zustandes des Pipelinematerials zu erhalten, da überlicherweise zur Bestimmung der Zähigkeit derzeit auch nur an bestimmten, über den Umfang der Rohrleitung verteilten Stellen Proben aus einem Pipelinesegment entnommen werden, die anschließend einem Kerbschlagversuch unterzogen werden. Es sind jedoch auch Inspektionsmolche 34 denkbar, die eine Vollabdeckung der inneren Oberfläche einer Rohrleitung realisieren. Für eine solche Vollabdeckung werden Sensoranordnungen in mehreren in axialer Richtung hintereinander angeordneten Messebenen angeordnet, wobei Sensoranordnungen in den einzelnen Messebenen so zu einander in Umfangsrichtung versetzt sind, dass jeweils zwischen den Sensoranordnungen einer Messebenen vorhandenen Lücken durch Sensoranordnungen anderer Messebenen abgedeckt werden. Mit einem solchen Inspektionsmolch 34 können beispielsweise Materialinhomogenitäten erfasst oder eine Längsnaht der Rohrleitung untersucht werden.

## Patentansprüche

1. Verfahren zur Bestimmung zumindest eines Materialkennwerts eines magnetisierbaren metallischen Körpers (26) mittels einer mikromagnetischen Sensoranordnung (18), die zumindest eine Anregungsspule (22) mit einem Magnetkern zur Signalanregung sowie wenigstens einen Empfänger aufweist,
umfassend die Schritte:
- Magnetisieren des Körpers (26) mittels der Sensoranordnung (18) über eine Strom- oder Spannungsanregung der Sensoranordnung (18), die zumindest einen Vorzeichenwechsel zwischen einem positiven Teil einer Halbwelle und einem negativen Teil einer Halbwelle umfasst,
- Messung zumindest eines Signals im Empfänger,
- Fourier-Transformation des Signals,
- Ermittlung des Materialkennwerts aus zumindest einer Fourier-Komponente,
**gekennzeichnet durch** die weiteren Schritte:
- Abschalten der Anregung und
- Messung des Nachschwingens des Signals im Empfänger nach Abschalten der Anregung und Verwendung zumindest des durch das Nachschwingen entstandenen Teils des Signals in der Fourier-Transformation.

2. Verfahren nach Anspruch 1, **dadurch gekennzeichnet, dass** eine pulsförmige Anregung erfolgt.

3. Verfahren nach Anspruch 2, **dadurch gekennzeichnet, dass** die Anregung durch genau eine Schwingung umfassend eine positive und eine negative Halbwelle, die unmittelbar aufeinander folgen, erfolgt.

4. Verfahren nach Anspruch 2 oder 3, **dadurch gekennzeichnet, dass** das Verfahren die nachfolgenden Schritte in der genannten Reihenfolge umfasst:
a) Einmagnetisieren des Körpers (26) durch einen ersten Anregungspuls,
b) Abschalten der Anregung während einer ersten Totzeit,
c) Anregen des Körpers (26) durch einen zweiten Anregungspuls in einem Messtakt,
d) Abschalten der Anregung während einer zweiten Totzeit,
wobei im Messtakt und in der zweiten Totzeit eine Messung des Induktionssignals erfolgt.

5. Verfahren nach einem der vorhergehenden Ansprüche, **dadurch gekennzeichnet, dass** die Anregung mit einer Magnetisierungsfrequenz zwischen 500 und 5000 Hz, vorzugsweise zwischen 800 und 1600 Herz erfolgt.

6. Verfahren nach einem der vorhergehenden Ansprüche, **dadurch gekennzeichnet, dass** die Messung des Signals mittels einer Empfangsspule (32) mit einem Magnetkern als Empfänger erfolgt, wobei die Sensoranordnung (18) vorzugsweise ein die Magnetkerne der Anregungsspule (22) und der Empfangsspule (32) ausbildendes Magnetjoch (20) aufweist.

7. Verfahren nach einem der vorhergehenden Ansprüche, **dadurch gekennzeichnet, dass** die Messung des Signals mittels eines Magnetfeldsensors als Empfänger erfolgt.

8. Verfahren nach einem der vorhergehenden Ansprüche, **dadurch gekennzeichnet, dass** eine Korrelation des zumindest einen Materialkennwerts mit zumindest einer Fourier-Komponente anhand von Prüfkörpern erfolgt, deren Fourier-Komponenten mit einem Verfahren gemäß einem der Anspruch 1 bis 7 gemessen wurden und deren Materialkennwerte bekannt sind und/oder vor oder nach der Bestimmung der Fourier-Komponenten mit anderen Messmethoden, ggf. auch durch zerstörende Werkstoffprüfung, bestimmt wurden.

9. Verfahren nach Anspruch 8, **dadurch gekennzeichnet, dass** die Ermittlung der Korrelation durch ein machine learning-Verfahren erfolgt.

10. Verfahren nach Anspruch 9, **dadurch gekennzeichnet, dass** die Ermittlung der Korrelation nach dem Random Forest-Verfahren oder mittels Support Vector Machine (SVM) erfolgt.

11. Verfahren nach einem der vorhergehenden Ansprüche, **dadurch gekennzeichnet, dass** ein mechanisch-technologischer Materialkennwert wie beispielsweise die Charpy-Zähigkeit, Materialinhomogenitäten wie beispielsweise lokale Aufhärtungen und/oder Materialspannungen wie beispielsweise Zugspannungen bestimmt werden.

## Claims

1. Method for determining at least one material characteristic of a magnetizable metal body (26) by means of a micromagnetic sensor arrangement (18), which comprises at least one excitation coil (22) having a magnetic core for signal excitation and at least one receiver,
comprising the steps:
- magnetizing the body (26) by means of the sensor arrangement (18) via current or voltage excitation of the sensor arrangement (18), which comprises at least one sign change between a positive part of a half-wave and a negative part of a half-wave,
- measuring at least one signal in the receiver,
- Fourier transformation of the signal,
- determining the material characteristic from at least one Fourier component,
**characterized by** the further steps:
- turning off the excitation, and
- measuring the post-oscillation of the signal in the receiver after turning off the excitation and using at least the part of the signal resulting from the post-oscillation in the Fourier transformation.

2. Method according to Claim 1, **characterized in that** pulsed excitation is carried out.

3. Method according to Claim 2, **characterized in that** the excitation is carried out by precisely one oscillation comprising a positive and a negative half-wave, which follow one another directly.

4. Method according to Claim 2 or 3, **characterized in that** the method comprises the following steps in the order mentioned:
a) magnetizing the body (26) by a first excitation pulse,
b) turning off the excitation during a first dead time,
c) exciting the body (26) by a second excitation pulse in a measurement sequence,
d) turning off the excitation during a second dead time,
a measurement of the induction signal being carried out in the measurement sequence and in the second dead time.

5. Method according to one of the preceding claims, **characterized in that** the excitation is carried out with a magnetization frequency of between 500 and 5000 Hz, preferably between 800 and 1600 hertz.

6. Method according to one of the preceding claims, **characterized in that** the measurement of the signal is carried out by means of a reception coil (32) having a magnetic core as the receiver, the sensor arrangement (18) preferably comprising a magnet yoke (20) forming the magnetic cores of the excitation coil (22) and of the reception coil (32).

7. Method according to one of the preceding claims, **characterized in that** the measurement of the signal is carried out by means of a magnetic field sensor as the receiver.

8. Method according to one of the preceding claims, **characterized in that** a correlation of the at least one material characteristic with at least one Fourier component is carried out with the aid of test bodies, the Fourier components of which have been measured by a method according to one of Claims 1 to 7 and the material characteristics of which are known and/or have been determined by other measurement methods, optionally including by destructive material testing, before or after determining the Fourier components.

9. Method according to Claim 8, **characterized in that** the determination of the correlation is carried out by a machine learning method.

10. Method according to Claim 9, **characterized in that** the determination of the correlation is carried out according to the random forest method or by means of a support vector machine (SVM).

11. Method according to one of the preceding claims, **characterized in that** a mechanical-technological material characteristic is determined, for example the Charpy toughness, material inhomogeneities, for example local hardness increases, and/or material stresses, for example tensile stresses.

## Revendications

1. Procédé permettant de déterminer au moins une valeur caractéristique de matériau d'un corps métallique magnétisable (26) au moyen d'un agencement de capteur micromagnétique (18) qui présente au moins une bobine d'excitation (22) pourvue d'un noyau magnétique pour l'excitation de signaux, ainsi qu'au moins un récepteur,
comprenant les étapes consistant à :
- magnétiser le corps (26) au moyen de l'agencement de capteur (18) par l'intermédiaire d'une excitation de courant ou de tension de l'agencement de capteur (18) qui comprend au moins un changement de signe entre une partie positive d'une demi-onde et une partie négative d'une demi-onde,
- mesurer au moins un signal dans le récepteur,
- effectuer une transformation de Fourier du signal,
- établir la valeur caractéristique de matériau à partir d'au moins une composante de Fourier, **caractérisé par** les étapes supplémentaires consistant à :
- désactiver l'excitation, et
- mesurer la post-oscillation du signal dans le récepteur après la désactivation de l'excitation, et utiliser au moins la partie du signal créée par la post-oscillation dans la transformation de Fourier.

2. Procédé selon la revendication 1, **caractérisé en ce qu'**une excitation en forme d'impulsion est effectuée.

3. Procédé selon la revendication 2, **caractérisé en ce que** l'excitation est effectuée par exactement une oscillation, comprenant une demi-onde positive et une demi-onde négative qui se suivent directement.

4. Procédé selon la revendication 2 ou 3, **caractérisé en ce que** le procédé comprend les étapes suivantes dans l'ordre nommé, consistant à :
a) magnétiser le corps (26) par l'intermédiaire d'une première impulsion d'excitation,
b) désactiver l'excitation pendant un premier temps mort,
c) exciter le corps (26) par une deuxième impulsion d'excitation dans un cycle de mesure,
d) désactiver l'excitation pendant un deuxième temps mort,
dans lequel une mesure du signal d'induction est effectuée dans le cycle de mesure et dans le deuxième temps mort.

5. Procédé selon l'une quelconque des revendications précédentes, **caractérisé en ce que** l'excitation est effectuée à une fréquence de magnétisation comprise entre 500 et 5000 Hz, de préférence entre 800 et 1600 Hertz.

6. Procédé selon l'une quelconque des revendications précédentes, **caractérisé en ce que** la mesure du signal est effectuée au moyen d'une bobine réceptrice (32) ayant un noyau magnétique en tant que récepteur, dans lequel l'agencement de capteur (18) présente de préférence une culasse magnétique (20) réalisant les noyaux magnétiques de la bobine d'excitation (22) et de la bobine réceptrice (32).

7. Procédé selon l'une quelconque des revendications précédentes, **caractérisé en ce que** la mesure du signal est effectuée au moyen d'un capteur de champ magnétique comme récepteur.

8. Procédé selon l'une quelconque des revendications précédentes, **caractérisé en ce qu'**une corrélation de ladite au moins une valeur caractéristique de matériau est effectuée avec au moins une composante de Fourier à l'aide d'échantillons dont les composantes de Fourier ont été mesurées par un procédé selon l'une quelconque des revendications 1 à 7 et dont les valeurs caractéristiques de matériau sont connues et/ou qui ont été déterminées avant ou après la détermination des composantes de Fourier par d'autres procédés de mesure, le cas échéant aussi par un essai de matériau destructif.

9. Procédé selon la revendication 8, **caractérisé en ce que** l'établissement de la corrélation est effectué par un procédé d'apprentissage machine.

10. Procédé selon la revendication 9, **caractérisé en ce que** l'établissement de la corrélation est effectué selon la méthode des forêts aléatoires ou au moyen d'une machine à vecteurs de support (SVM).

11. Procédé selon l'une quelconque des revendications précédentes, **caractérisé en ce qu'**une valeur caractéristique de matériau mécanique et technologique, comme par exemple la résilience Charpy, des inhomogénéités de matériau, comme par exemple des durcissements locaux, et/ou des tensions de matériau, comme par exemple des tensions de traction, sont déterminées.
